# EUROPÄISCHE PATENTSCHRIFT

(11) **EP 3 453 552 B1**
(45) Veröffentlichungstag und Bekanntmachung des Hinweises auf die Patenterteilung: **24.03.2021**
(21) Anmeldenummer: 17190604.3
(22) Anmeldetag: 12.09.2017
(51) Int. Cl.: B60K 13/04, B60K 15/03, B60K 15/077

(54) **VORRATSBEHÄLTER**
STORAGE CONTAINER
RÉSERVOIR DE STOCKAGE

(43) Veröffentlichungstag der Anmeldung: 13.03.2019
(73) Patentinhaber: Magna Energy Storage Systems GesmbH, 8261 Sinabelkirchen (AT)
(72) Erfinder: GROSS, Jörg, 50389 Wesseling (DE); KAHLER, Bernd, 8010 Graz (AT); MAREK, Kai, 8272 Sebersdorf (AT); REHERMANN, Andreas, 41352 Korschenbroich (DE)
(74) Vertreter: Zangger, Bernd

(56) Entgegenhaltungen:
- DE-A1-102007 047 862
- DE-A1-102009 045 691
- DE-A1-102010 020 200
- DE-A1-102010 062 982
- DE-A1-102016 013 085
- US-A1- 2016 146 082

## Beschreibung

### Gebiet der Erfindung

Die vorliegende Erfindung betrifft einen Vorratsbehälter für Flüssigkeiten.

### Stand der Technik

Solche Vorratsbehälter können bekannter Weise eine Schwallwand umfassen. Vorratsbehälter die Schwallwände umfassen werden beispielsweise als Tanks für Kraftstoff oder für verschiedene flüssige Zusatzstoffe in Kraftfahrzeugen eingesetzt. Durch die Bewegung in einem betriebenen Fahrzeug kann es zu einem Schwappen der Flüssigkeit im Vorratsbehälter kommen. Ein derartiges Schwappen der Flüssigkeit kann mit Schwallwänden reduziert werden.

Ferner ist bekannt, dass in Vorratsbehältern Heizungen eingebaut werden können, um die bevorratete Flüssigkeit zu erwärmen. Beispielsweise werden Heizungen für flüssige Additive zur Abgasnachbehandlung eingesetzt.

So offenbart beispielsweise die DE 10 2014 107 519 A1 eine Heizung für eine Vorrichtung zur Bereitstellung eines flüssigen Additivs in einem Kraftfahrzeug, aufweisend mindestens ein schaltbares Widerstandsheizelement.

Elektrische Heizelemente werden üblicherweise an den Behälterwänden bzw. am Behälterboden im Inneren der Vorratsbehälter angeordnet. Elektrische Leitungen müssen dann meist mittels Bohrungen durch die Behälterwände geführt werden, wobei die Bohrungen entsprechend abgedichtet werden müssen.

Die DE 10 2010 062982 A1 offenbart ein Tankeinbaumodul zur Entnahme von Flüssigkeit aus einem Fahrzeugtank, umfassend einen Grundkörper aus einem Kunststoff, an dem eine Flüssigkeitsentnahmeeinrichtung, die wenigstens eine dem Tankinnenraum zuordenbare Entnahmeöffnung umfasst, und mindestens ein elektrisches Heizelement angeordnet sind, wobei das elektrische Heizelement einen Heizkörper mit einer umspritzten Kunststoffummantelung umfasst, wobei die Kunststoffummantelung einen mit dem Grundkörper verschweißbaren Kunststoff, insbesondere hochdichtes Polyethylen, und/oder den gleichen Kunststoff wie der Grundkörper sowie mindestens einen Füllstoff mit hoher Wärmeleitfähigkeit aufweist und mit dem Grundkörper an wenigstens einer Kontaktstelle verschweißt ist.

Aus der DE 10 2010 020200 A1 ist ein Tank zur Bevorratung eines flüssigen Betriebsstoffs für ein Kraftfahrzeug bekannt, aufweisend eine Tankwand und einen Innenraum, der von der Tankwand begrenzt ist, sowie zumindest eine Heizvorrichtung, die von außen durch die Tankwand montiert ist und sich in den Innenraum hinein erstreckt.

Die DE 10 2009 045691 A1 zeigt einen Tank zur Aufnahme eines flüssigen Mediums, umfassend mindestens einen Innenraum zur Aufnahme des flüssigen Mediums, wobei der Tank einen Tankboden aufweist, wobei in dem Innenraum an dem Tankboden mindestens ein Rückhalteelement vorgesehen ist, wobei mindestens eine Ansaugstelle zum Ansaugen von flüssigem Medium aus dem Tank in dem Rückhalteelement angeordnet ist, wobei das Rückhalteelement mindestens ein Wandmaterial aufweist, wobei das Wandmaterial eine rückhaltende Wirkung für das flüssige Medium aufweist, wobei das Wandmaterial zumindest teilweise durchlässig für das flüssige Medium ausgestaltet ist.

Aus der DE 10 2007 047862 A1 ist eine Fluiderwärmungsvorrichtung bekannt mit: einem Erwärmungsabschnitt, der in einem Fluid angeordnet ist, das in einem Behälter gespeichert ist, und der in einer axialen Richtung länglich ausgebildet ist, um das Fluid zwischen einem unteren Abschnitt und einem oberen Abschnitt des Behälters zu erwärmen, indem er mit elektrischer Energie versorgt wird; und vielen Wärmeübertragungsbereichen, die entlang der axialen Richtung des Erwärmungsabschnitts angeordnet sind, wobei jeder Wärmeübertragungsbereich eine Plattenform aufweist, die sich von dem Erwärmungsabschnitt zu einer radialen Außenseite des Erwärmungsabschnitts annähernd senkrecht zu der axialen Richtung des Erwärmungsabschnitts erstreckt.

### Zusammenfassung der Erfindung

Es ist eine Aufgabe der Erfindung, einen Vorratsbehälter für Flüssigkeiten anzugeben, insbesondere für den Einsatz in einem Kraftfahrzeug, der beheizbar ist und dabei einfach und kostengünstig herstellbar ist.

Die Lösung der Aufgabe erfolgt durch einen Vorratsbehälter für Flüssigkeiten, umfassend Behälterwände, die den geschlossenen Raum des Vorratsbehälters bilden, zumindest eine Schwallwand im geschlossenen Raum des Vorratsbehälters, und ein elektrisches Heizelement zur Beheizung der Flüssigkeit im geschlossenen Raum des Vorratsbehälters, wobei die Schwallwand eine Trennwand mit Durchgangsöffnungen ist, wobei das elektrische Heizelement in die Schwallwand integriert ist, wobei das elektrische Heizelement eine Heizmatte ist, die in die Schwallwand eingebettet ist.

Erfindungsgemäß umfasst ein Vorratsbehälter also zunächst eine Schwallwand. Eine solche Schwallwand dient zur Reduzierung von unerwünschtem "Schwappen", also nachfolgenden Bewegungen der Flüssigkeit im Inneren des Behälters wenn der Vorratsbehälter bewegt wird.

Schwallwände stellen dazu ein Hindernis für die Bewegung der Flüssigkeit dar, durch abschnittsweise Ausbildung von Trennwänden, ermöglichen dabei aber grundsätzlich auch einen verzögerten Durchgang der Flüssigkeit durch diese Trennwände, insbesondere durch Vorsehen von Durchgangsöffnungen. Eine Schwallwand ist also erfindungsgemäß eine Trennwand mit Durchgangsöffnungen.

Eine solche Schwallwand wird erfindungsgemäß dazu genutzt, ein elektrisches Heizelement aufzunehmen. Dadurch erfüllt die Schwallwand einen Doppelnutzen und der zur Verfügung stehende Raum wird besser genutzt. Die Schwallwand kann darüber hinaus auch gleich als wärmeleitendes Element genutzt werden, so dass eine verbesserte Einbringung der Wärme in die Flüssigkeit erreicht werden kann. Zudem wird eine elektrische Anbindung des Heizelements erleichtert, da eine solche Anbindung über die Schwallwand und/oder über die mit der Schwallwand verbundenen Behälterwände erreicht werden kann.

Erfindungsgemäß ist das elektrische Heizelement eine Heizmatte, die in die Schwallwand eingebettet ist.

Das elektrische Heizelement kann auch Bereiche aufweisen, die aus der Schwallwand herausragen und sich nicht innerhalb der Schwallwand befinden. Bevorzugt ist aber das ganze Heizelement innerhalb der Schwallwand angeordnet.

Ein solcher Vorratsbehälter kann besonders vorteilhaft im Spritzgussverfahren hergestellt werden, insbesondere mitsamt der Schwallwand.

Bevorzugt ist ein elektrischer Anschluss für das Heizelement von außerhalb des Behälters durch die Behälterwände in die Schwallwand geführt.

Vorzugsweise ist der elektrische Anschluss für das Heizelement zumindest abschnittsweise von den Behälterwänden umspritzt. Die Behälterwände können einen Obergurt und einen Untergurt umfassen. Der elektrische Anschluss kann dann im Obergurt und/oder im Untergurt mitgespritzt sein.

Der elektrische Anschluss kann auch von außen in die Schwallwand eingelegt und anschließend dicht verschweißt sein.

Der elektrische Anschluss für das Heizelement umfasst bevorzugt außen an den Behälterwänden, insbesondere an einem Obergurt, einen Anschlussstecker, wobei der Anschlussstecker vorzugsweise von den Behälterwänden, insbesondere dem Obergurt, umspritzt ist.

Die Schwallwand besteht bevorzugt zumindest bereichsweise, insbesondere nahe des Heizelements, aus einem gut wärmeleitenden Material. Ein solches gut wärmeleitendes Material kann insbesondere eine bessere Wärmeleitfähigkeit aufweisen als das Behältermaterial.

Die Schwallwand kann zumindest bereichsweise aus dem selben Material bestehen wie die Behälterwände.

Besonders bevorzugt ist die Schwallwand als Verbund eines gut wärmeleitenden Materials und des Materials der Behälterwände hergestellt, insbesondere im Zweikomponenten-Spritzguss.

Bevorzugt wird das elektrische Heizelement, also die Heizmatte, im Zuge der Herstellung der Behälterwände und der Schwallwand im Spritzguss mit eingespritzt.

Das Heizelement, also die Heizmatte, kann auch in eine doppelwandige Schwallwand eingeschoben sein.

### Kurzbeschreibung der Zeichnungen

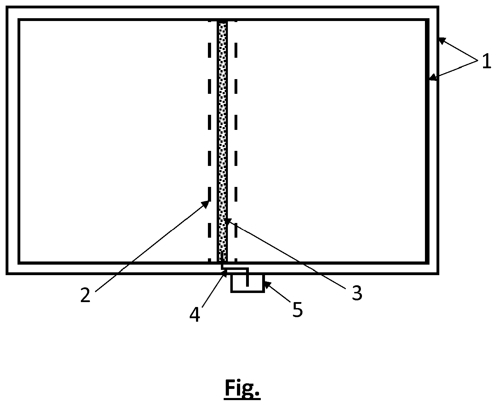

Die Erfindung wird im Folgenden beispielhaft unter Bezugnahme auf die Zeichnung beschrieben.
- Fig.: ist eine schematische Schnittansicht eines erfindungsgemäßen Vorratsbehälters.

### Detaillierte Beschreibung der Erfindung

In Fig. ist ein erfindungsgemäßer Vorratsbehälter für Flüssigkeiten dargestellt, welcher Behälterwände 1 umfasst, so dass die Behälterwände 1 zusammen den geschlossenen Raum des Vorratsbehälters zur Aufnahme der Flüssigkeit bilden. Die Behälterwände 1 können eine äußere und eine innere Behälterwand 1 umfassen, also insbesondere einen Obergurt und einen Untergurt. Die Behälterwände bestehen bevorzugt aus Kunststoff.

Ferner weist der Vorratsbehälter zumindest eine Schwallwand 2 im geschlossenen Raum des Vorratsbehälters auf, die im dargestellten Beispiel in Einbaurichtung vertikal im Vorratsbehälter angeordnet ist. Die Schwallwand 2 wird im Wesentlichen durch eine Trennwand mit Durchgangsöffnungen für die Flüssigkeit gebildet. Die Schwallwand 2 ist daher ein flächiges, planares Bauteil.

Der Vorratsbehälter umfasst zudem ein elektrisches Heizelement 3 zur Beheizung der Flüssigkeit im geschlossenen Raum des Vorratsbehälters, und zwar eine Heizmatte.

Das elektrische Heizelement 3 ist in die Schwallwand 2 integriert.

Die Schwallwand 2 ist als Verbund eines gut wärmeleitenden Materials und des Materials der Behälterwände 1 hergestellt, insbesondere im Zweikomponenten-Spritzguss Verfahren.

Das elektrische Heizelement 3 wurde im Zuge der Herstellung der Behälterwände 1 und der Schwallwand 2 im Spritzguss mit eingespritzt oder von außen in die Schwallwand 2 eingelegt und anschließend dicht verschweißt.

Ein elektrischer Anschluss 4 für das Heizelement 3 ist von außerhalb des Behälters durch die Behälterwände 1, nämlich durch Obergurt und Untergurt, in die Schwallwand 2 geführt.

Der elektrische Anschluss 4 für das Heizelement 3 ist abschnittsweise von den Behälterwänden 1 umspritzt.

Der elektrische Anschluss 4 für das Heizelement 3 umfasst außen, an den Behälterwänden 1, einen Anschlussstecker 5, der ebenfalls von den Behälterwänden 1 umspritzt sein kann.

### Bezugszeichenliste

- 1: Behälterwand
- 2: Schwallwand
- 3: elektrisches Heizelement
- 4: elektrischer Anschluss
- 5: Anschlussstecker

## Patentansprüche

1. Vorratsbehälter für Flüssigkeiten, umfassend Behälterwände (1), die den geschlossenen Raum des Vorratsbehälters bilden, zumindest eine Schwallwand (2) im geschlossenen Raum des Vorratsbehälters, und ein elektrisches Heizelement (3) zur Beheizung der Flüssigkeit im geschlossenen Raum des Vorratsbehälters, wobei die Schwallwand (2) eine Trennwand mit Durchgangsöffnungen ist,
**dadurch gekennzeichnet, dass** das elektrische Heizelement (3) in die Schwallwand (2) integriert ist, wobei das elektrische Heizelement (3) eine Heizmatte ist, die in die Schwallwand (2) eingebettet ist.

2. Vorratsbehälter nach Anspruch 1,
**dadurch gekennzeichnet, dass** ein elektrischer Anschluss (4) für das Heizelement (3) von außerhalb des Behälters durch die Behälterwände (1) in die Schwallwand (2) geführt ist.

3. Vorratsbehälter nach Anspruch 2, **dadurch gekennzeichnet , dass** der elektrische Anschluss (4) für das Heizelement (3) zumindest abschnittsweise von den Behälterwänden (1) umspritzt ist.

4. Vorratsbehälter nach Anspruch 2 oder 3, **dadurch gekennzeichnet , dass** der elektrische Anschluss (4) für das Heizelement (3) außen an den Behälterwänden (1) einen Anschlussstecker (5) umfasst, wobei der Anschlussstecker (5) vorzugsweise von den Behälterwänden (1) umspritzt ist.

5. Vorratsbehälter nach zumindest einem der vorhergehenden Ansprüche,
**dadurch gekennzeichnet, dass** die Schwallwand (2) zumindest bereichsweise aus einem gut wärmeleitenden Material besteht.

6. Vorratsbehälter nach zumindest einem der vorhergehenden Ansprüche,
**dadurch gekennzeichnet , dass** die Schwallwand (2) zumindest bereichsweise aus dem selben Material besteht wie die Behälterwände (1).

7. Vorratsbehälter nach zumindest einem der vorhergehenden Ansprüche,
**dadurch gekennze ich n e t ,** dass die Schwallwand (2) als Verbund eines gut wärmeleitenden Materials und des Materials der Behälterwände (1) hergestellt ist, insbesondere im Zweikomponenten-Spritzguss.

8. Vorratsbehälter nach zumindest einem der vorhergehenden Ansprüche,
**dadurch gekennzeichnet, dass** das elektrische Heizelement (3) im Zuge der Herstellung der Behälterwände (1) und der Schwallwand (2) im Spritzguss mit eingespritzt ist.

## Claims

1. Storage tank for liquids, comprising tank walls (1) which form the closed space of the storage tank, at least one baffle (2) in the closed space of the storage tank, and an electrical heating element (3) for heating the liquid in the closed space of the storage tank, wherein the baffle (2) is a partition wall with passage openings, **characterized in that** the electrical heating element (3) is integrated in the baffle (2), wherein the electrical heating element (3) is a heating mat which is embedded in the baffle (2).

2. Storage tank according to Claim 1, **characterized in that** an electrical connection (4) for the heating element (3) is passed from outside the tank through the tank walls (1) into the baffle (2).

3. Storage tank according to Claim 2, **characterized in that** the electrical connection (4) for the heating element (3) is at least partially encapsulated by injection-moulding via the tank walls (1).

4. Storage tank according to Claim 2 or 3, **characterized in that** the electrical connection (4) for the heating element (3) comprises a connection plug (5) on the outside of the tank walls (1), wherein the connection plug (5) is preferably encapsulated by injection-moulding via the tank walls (1).

5. Storage tank according to at least one of the preceding claims, **characterized in that** the baffle (2) consists at least partially of a good thermally conductive material.

6. Storage tank according to at least one of the preceding claims, **characterized in that** the baffle (2) consists at least partially of the same material as the tank walls (1).

7. Storage tank according to at least one of the preceding claims, **characterized in that** the baffle (2) is produced as a composite of a good thermally conductive material and the material of the tank walls (1), in particular in a two-component injection-moulding process.

8. Storage tank according to at least one of the preceding claims, **characterized in that**, during the course of the production of the tank walls (1) and the baffle (2), the electrical heating element (3) is injection-moulded therein and therewith.

## Revendications

1. Récipient de stockage de liquides, comprenant des parois de récipient (1) qui forment l'espace fermé du récipient de stockage, au moins une paroi anti-projection (2) placée dans l'espace fermé du récipient de stockage, et un élément chauffant électrique (3) destiné à chauffer le liquide dans l'espace fermé du récipient de stockage, la paroi anti-projection (2) étant une paroi de séparation pourvue d'ouvertures traversantes,
**caractérisé en ce que** l'élément chauffant électrique (3) est intégré dans la paroi anti-projection (2), l'élément chauffant électrique (3) étant un tapis chauffant qui est incorporé dans la paroi anti-projection (2) .

2. Récipient de stockage selon la revendication 1,
**caractérisé en ce qu'**une liaison électrique (4) destinée à l'élément chauffant (3) est guidée depuis l'extérieur du récipient jusque dans la paroi anti-projection (2) à travers les parois du récipient (1).

3. Récipient de stockage selon la revendication 2,
**caractérisé en ce que** la liaison électrique (4) destinée à l'élément chauffant (3) est au moins par endroits enrobée par injection par les parois de récipient (1).

4. Récipient de stockage selon la revendication 2 ou 3,
**caractérisé en ce que** la liaison électrique (4) destinée à l'élément chauffant (3) comprend un connecteur (5) à l'extérieur des parois de récipient (1), le connecteur (5) étant de préférence enrobé par injection par les parois de récipient (1).

5. Récipient de stockage selon au moins l'une des revendications précédentes,
**caractérisé en ce que** la paroi anti-projection (2) est au moins par endroits constituée d'un matériau présentant une bonne conductivité thermique.

6. Récipient de stockage selon l'une au moins des revendications précédentes,
**caractérisé en ce que** la paroi anti-projection (2) est au moins par endroits constituée du même matériau que les parois de récipient (1).

7. Récipient de stockage selon l'une au moins des revendications précédentes,
**caractérisé en ce que** la paroi anti-projection (2) est réalisée sous la forme d'un composite d'un matériau présentant une bonne conductivité thermique et du matériau des parois de récipient (1), notamment en un moulage par injection à deux composants.

8. Récipient de stockage selon l'une au moins des revendications précédentes,
**caractérisé en ce que** l'élément chauffant électrique (3) est injecté au cours de la fabrication des parois de récipient (1) et de la paroi anti-projection (2) dans le moulage par injection.
